# EUROPÄISCHE PATENTSCHRIFT

(11) **EP 3 513 470 B1**
(45) Veröffentlichungstag und Bekanntmachung des Hinweises auf die Patenterteilung: **12.01.2022**
(21) Anmeldenummer: 17745245.5
(22) Anmeldetag: 30.06.2017
(51) Int. Cl.: H02B 1/32, H02B 1/01, H02B 1/30

(54) **SCHALTSCHRANKANORDNUNG MIT MINDESTENS ZWEI SCHALTSCHRÄNKE MIT EINEM RAHMENGESTELL UND EINER INNENAUSBAUKOMPONENTE**
ELECTRICAL CABINET ASSEMBLY WITH AT LEAST TWO ELECTRICAL CABINETS HAVING A FRAME AND AN INTERIOR FITTING COMPONENT
ENSEMBLE D'ARMOIRES ÉLECTRIQUES COMPRENANT AU MOINS DEUX ARMOIRES ÉLECTRIQUES MUNIE D'UNE OSSATURE ET D'UN ÉLÉMENT DE MONTAGE INTÉRIEUR

(30) Priorität: 15.09.2016 DE 102016117393
(43) Veröffentlichungstag der Anmeldung: 24.07.2019
(73) Patentinhaber: Rittal GmbH & Co. KG, 35745 Herborn (DE)
(72) Erfinder: SCHINDLER, Timo, 35075 Gladenbach (DE); BRÜCK, Daniel, 35764 Sinn (DE); HOLIGHAUS, Heiko, 35713 Eschenburg (DE)
(74) Vertreter: Angerhausen, Christoph
(86) Internationale Anmeldenummer: PCT/DE2017/100549
(87) Internationale Veröffentlichungsnummer: WO 2018/050146

(56) Entgegenhaltungen:
- WO-A1-2007/104406
- WO-A2-2005/034302
- DE-A1- 10 007 334
- DE-A1- 19 647 727
- DE-A1- 19 737 673
- DE-A1-102004 033 721
- DE-A1-102006 036 487

## Beschreibung

Die Erfindung geht aus von einer Schaltschrankanordnung gemäß dem Oberbegriff des Anspruchs 1. Eine solche Anordnung ist aus der WO 2007/104406 A1 bekannt. Ähnliche Anordnungen zeigen auch die DE 10 2004 033721 A1, die WO 2005/034302 A2, die DE 10 2006 036487 A1 und die DE 197 37 673 A1.

Die DE 196 47 802 C1 zeigt einen Schaltschranke mit einem quaderförmigen Rahmengestell aus vier Vertikalprofilen und acht Horizontalprofilen, wobei vier der Profile einen rechteckigen Profilrahmen bilden und zwei der vier den Profilrahmen bildenden und sich parallel zueinander erstreckenden Profile jeweils eine erste Befestigungsprofilseite mit einer ersten Reihe aus unter Einhaltung eines konstanten Rastermaßes zueinander beabstandeten Befestigungsaufnahmen aufweisen, wobei die ersten Befestigungsprofilseiten in einer gemeinsamen Ebene liegen und an diesen beiden ersten Befestigungsprofilseiten eine sich zwischen den parallelen Profilen erstreckende Innenausbaukomponente montiert ist, die eine Montageseite mit einer zweiten Reihe Befestigungsaufnahmen aufweist, die sich senkrecht zu der ersten Reihe erstreckt. Ähnliche Anordnungen beschreiben auch die DE 196 47 727 A1 und die DE 196 47 753 C2. Die DE 100 07334 A1 beschreibt eine Schaltschrankanordnung mit Rahmengestelle, die über einen Anreihverbinder miteinander verbunden sind.

Die Horizontal- und Vertikalprofile, aus denen das Rahmengestell des Schaltschranks aufgebaut ist, weisen häufig mindestens eine zum Innenraum des Schaltschranks gerichtete Profilseite mit einer Rasterlochung auf, über die sich für den Innenausbau des Schaltschranks Ausbaukomponenten an dem Rahmengestell des Schaltschranks festlegen lassen. Derartige Innenausbaukomponenten sind grundsätzlich auf keinerlei bestimmte Komponenten beschränkt. Lediglich beispielhaft seien die aus dem oben genannten Stand der Technik bekannten Montageschienen, auch Montagechassis genannt, erwähnt, welche beispielsweise zwischen zwei parallel gegenüberliegenden Profilen des Rahmengestells des Schaltschranks montiert werden können, um zwischen diesen Profilen weitere Montagepunkte in Form beispielsweise einer weiteren Lochreihe aus Befestigungsaufnahmen bereit zu stellen, so dass für den Innenausbau des Schaltschranks nicht nur die Befestigungsaufnahmen der Profile des Schaltschrankrahmengestells als Befestigungspunkte zur Verfügung stehen, sondern auch die mit Hilfe der Montageschiene bereitgestellten weiteren Befestigungspunkte.

Es ist ein grundsätzliches Bestreben im Schaltschrankbau die Packungsdichte der im Schaltschrank aufgenommenen Komponenten unter Berücksichtigung aller Randbedingungen, wie thermischen Limitierungen, soweit wie möglich zu erhöhen. Dazu ist es nachteilhaft, dass bei den bekannten Anordnungen für die Bereitstellung jeder weiteren Montageebene eine weitere Innenausbaukomponente, etwa eine Montageschiene der zuvor beschriebenen Art, bereitgestellt werden muss, die zwangläufig über die Profile des Rahmengestells festgelegt werden muss. Dies limitiert die Innenausbaumöglichkeiten der bekannten Schaltschränke.

Es ist daher die Aufgabe der Erfindung, eine Schaltschrankanordnung der eingangs beschriebenen Art derart weiterzuentwickeln, dass er einen möglichst flexiblen Innenausbau ermöglicht.

Diese Aufgabe wird durch eine Schaltschrankanordnung mit den Merkmalen des Anspruchs 1 gelöst. Vorteilhafte Ausführungsformen sind Gegenstand der abhängigen Ansprüche. Funktional betrachtet erweitert somit die zweite Reihe Befestigungsaufnahmen der Montageseite der Innenausbaukomponente die erste Reihe Befestigungsaufnahmen in einer Richtung senkrecht zu der Erstreckungsrichtung der ersten Reihe Befestigungsaufnahmen, unter Einhaltung des Rastermaßes der ersten Reihe Befestigungsaufnahmen. Beispielsweise kann die erste Reihe Befestigungsaufnahmen entlang einer vertikalen Profilseite eines Vertikalprofils des Profilrahmens ausgebildet sein, wobei die erste Reihe Befestigungsaufnahmen aus unter Einhaltung des Rastermaßes regelmäßig beabstandeten Befestigungsaufnahmen besteht. Die Innenausbaukomponente kann ein Montagechassis sein, dessen Montageseite und eine sich entlang der Montageseite erstreckende zweite Reihe Befestigungsaufnahmen senkrecht zu dem Vertikalprofil, mithin horizontal erstreckt. Für die Gewährleistung der oben beschriebenen Einhaltung des Rastermaßes kann dabei vorgesehen sein, dass die zweite Reihe Befestigungsaufnahmen der Innenausbaukomponente auf einer vertikalen Höhe angeordnet ist, die der Position einer der Befestigungsaufnahmen der ersten Reihe Befestigungsaufnahmen in Vertikalrichtung entspricht, so dass die betreffende Befestigungsaufnahme der ersten Reihe

Befestigungsaufnahmen auf derselben Höhe wie die zweite Reihe Befestigungsaufnahmen der Innenausbaukomponente angeordnet ist.

Zur Gewährleistung der Einhaltung des Rastermaßes kann vorgesehen sein, dass die Befestigungsmittel für die Festlegung der Innenausbaukomponente an dem Profilrahmen entsprechend ausgelegt sind. Dazu können die Befestigungsmittel beispielsweise Hakenelemente sein, die in die Befestigungsaufnahmen der ersten Reihe Befestigungsaufnahmen des Profilrahmens eingreifen. Derartige Befestigungsmittel sind aus der DE 196 47 802 C1 bekannt.

Die Maßhaltigkeit der Befestigungsaufnahmen kann sich jedoch nicht nur auf die genannte Kombination von einem Profilrahmen mit einer Innenausbaukomponente beschränken. Es kann ergänzend vorgesehen sein, dass die Befestigungsaufnahmen unterschiedlicher Profile des Profilrahmens ebenso unter Einhaltung des Rastermaßes angeordnet sind. Beispielsweise können zwei senkrecht zueinander stehende Profile des Profilrahmens jeweils eine Befestigungsprofilseite aufweisen, die in einer gemeinsamen Ebene liegen, wobei beide Befestigungsprofilseiten jeweils eine sich entlang ihrer Längsrichtung erstreckende Reihe aus Befestigungsaufnahmen aufweisen, so dass die beiden Reihen Befestigungsaufnahmen insbesondere senkrecht zueinander verlaufen. Analog zu der Relation der Befestigungsaufnahmen der Innenausbaukomponente in Bezug auf die Profilseite des Profilrahmens kann dabei vorgesehen sein, dass die beiden Reihen Befestigungsaufnahmen der beiden Befestigungsprofilseiten unter Einhaltung eines Rastermaßes, beispielsweise eines zweidimensionalen 25 mm x 25 mm - Rastermaßes, mithin in einer gleichmäßigen Rastermatrix, angeordnet sind.

Es ist leicht nachvollziehbar, dass in dem Fall, dass sich die Einhaltung des Rastermaßes über sämtliche in einer Ebene befindenden Lochreihen an Befestigungsprofilseiten und gegebenenfalls daran befestigten Innenausbaukomponenten hinweg erstreckt, gewährleistet ist, dass beispielsweise auch dann, wenn eine weitere Innenausbaukomponente über die Reihe Befestigungsaufnahmen einer ersten Innenausbaukomponente, etwa senkrecht zu dieser, festgelegt wird, die Befestigungsaufnahmen der weiteren Innenausbaukomponente ebenso unter Einhaltung des Rastermaßes angeordnet sind, so dass das beschriebene Innenausbaukonzept beliebig kaskadierbar ist. Gegenüber dem Stand der Technik ergibt sich somit insbesondere der Vorteil, dass für die Festlegung von Innenausbaukomponenten, insbesondere Montageschienen oder Montagechassis, nicht nur die Profilstreben des Profilrahmens des Schaltschrankrahmengestells geeignet sind, sondern auch die zweite Reihe Befestigungsaufnahmen, welche über eine erste Innenausbaukomponente, die zwischen zwei parallelen Profilstreben des Rahmengestells festgelegt wird, so dass die zweite Reihe Befestigungsaufnahmen dieser Innenausbaukomponente für die maßhaltige Festlegung mindestens einer weiteren Innenausbaukomponente dienen kann.

Die Befestigungsaufnahmen im Sinne der vorliegenden Erfindung sind auf keine bestimmten Geometrien beschränkt. Grundsätzlich haben sich jedoch rechteckige Befestigungsaufnahmegeometrien als besonders geeignet herausgestellt, da sie aufgrund ihrer geraden Begrenzungsseiten die präzise Festlegung der Komponenten aneinander, beispielsweise der Innenausbaukomponente an dem Profil des Profilrahmens, erlaubt. Die Befestigungsaufnahmen können insbesondere quadratische oder rechteckige Geometrien aufweisen, wie sie in der DE 196 47 802 C1 gezeigt sind.

Für die Einhaltung des Rastermaßes kann der Mittelpunkt jeweils einer der Befestigungsaufnahmen der in einer gemeinsamen Ebene liegenden Befestigungsprofilseiten auf einer Geraden liegen, auf der die Mittelpunkte der zweiten Reihe Befestigungsaufnahmen der Montageseite liegen. Auf diese Weise ist sichergestellt, dass auch dann, wenn die Befestigungsaufnahmen der ersten Befestigungsprofilseite eine von der Geometrie der Befestigungsaufnahmen der Innenausbaukomponente abweichende Geometrie aufweisen, immer noch die Einhaltung des Rastermaßes gewährleistet ist.

Die erste gemeinsame Ebene kann eine von der Außenseite des Rahmengestells zugängliche Montageebene für die Befestigung der Innenausbaukomponente sein, wobei die Montageebene gegenüber einer äußeren Dichtkante des Rahmengestells zurückversetzt ist. Eine dazu geeignete Profilgeometrie ist aus der DE 10 2014 101 404 A1 bekannt.

Die über die erste oder die zweite Ebene an den Profilen montierte Innenausbaukomponente kann mit ihrer Montageseite in der jeweiligen Ebene über die sie montiert ist, liegen. Dazu kann die Innenausbaukomponente beispielsweise Montageflansche aufweisen, die über eine Kröpfung in die Montageseite übergehen, so dass über die Kröpfung ein Dickenausgleich für den Montageflansch realisiert ist. Da die Innenausbaukomponente stets mit ihrer Montageseite dem Inneren des Schaltschranks zugewandt an den Profilen des Rahmengestells festgelegt wird, kann die Kröpfung abhängig davon, ob die Innenausbaukomponente an einer von der Innenseite des Schaltschranks zugänglichen Ebene oder an einer zur Außenseite des Rahmengestells gewandten Ebene festgelegt werden soll, entsprechend gekröpft sein.

Mindestens eine der Befestigungsprofil seiten je Ebene kann eine Positionierhilfe für die Montage der ersten Innenausbaukomponente in der Ebene aufweisen, wobei die Positionierhilfe Markierungen umfasst, die in Längsrichtung der jeweiligen ersten oder zweiten Befestigungsprofilseite unter einem Abstand zueinander angeordnet sind, der dem Rastermaß oder einem Vielfachen davon entspricht. Die Markierungen können beispielsweise in Form von Durchlässen durch einen an die erste oder zweite Befestigungsprofilseite angrenzenden Dichtsteg ausgebildet sein, wobei der Dichtsteg aus zwei über eine mindestens 180°-Umkantung auf sich zurückgefalteten Profilseiten gebildet ist, so dass der Durchlass weiterhin die Funktion aufweist, einen Lackablauf für die Tauchlackierung des Rahmengestells bereitzustellen.

An der ersten Innenausbaukomponente kann eine zweite Innenausbaukomponente festgelegt sein, wobei sich senkrecht zu der zweiten Reihe Befestigungsaufnahmen der Montageseite der ersten Innenausbaukomponente eine weitere zweite Reihe Befestigungsaufnahmen einer weiteren Montageseite der zweiten Innenausbaukomponente parallel zu der ersten Reihe Befestigungsaufnahmen der ersten Befestigungsprofilseite erstreckt. Es kann insbesondere vorgesehen sein, dass die beiden Montageseiten der beiden Innenausbaukomponenten sowie die Befestigungsprofilseite des Profilrahmens, über die zumindest die erste Innenausbaukomponente an dem Profilrahmen festgelegt ist, in einer gemeinsamen Ebene liegen, so dass die Innenausbaukomponenten sowie die fluchtenden Befestigungsprofilseiten des Profilrahmens eine gemeinsame Montageebene mit in den beiden Dimensionen der Montageebene maßhaltigem Rasterabstand bilden.

Die zweite Reihe Befestigungsaufnahmen der weiteren Montageseite der zweiten Innenausbaukomponente kann unter Einhaltung des Rastermaßes der ersten Reihe Befestigungsaufnahmen angeordnet sein. Dabei können die Befestigungsaufnahmen der zweiten Reihe Befestigungsaufnahmen der ersten Innenausbaukomponente unter dem Rastermaß der ersten Reihe Befestigungsaufnahmen angeordnet sein, sowohl untereinander als auch in Bezug auf die erste Reihe Befestigungsaufnahmen der ersten Befestigungsprofilseite, so dass die Befestigungsaufnahmen der ersten Befestigungsprofilseite sowie der ersten und der zweiten Innenausbaukomponente in einem zweidimensionalen Lochraster mit dem in zwei Dimensionen konstanten Rastermaß, beispielsweise in einem 25 mm x 25mm Lochraster angeordnet sind.

Die Profilrahmen können über sich senkrecht zu den ersten Befestigungsprofilseiten des Profilrahmens erstreckende Dichtstege aneinander grenzen, wodurch ein Abstand zwischen den ersten Befestigungsprofilseiten ausgebildet ist, den der Anreihverbinder mit seiner Montageseite überbrückt, so dass eine durchgehende Montageebene zwischen den Profilrahmen der aneinander grenzenden Schaltschränke gebildet ist.

Die zuvor beschriebenen Prinzipien sind analog sowohl auf vertikal übereinander gestapelte, als auch horizontal aneinander gereihte Rahmengestelle übertragbar, wobei über entsprechende, insbesondere dieselben Anreihverbinder eine durchgehende Montageebene zwischen den Profilrahmen der in Vertikalrichtung bzw. Horizontalrichtung aneinander grenzenden gebildet ist. Insbesondere kann somit ein in Vertikalrichtung bzw. Horizontalrichtung durchgehendes Systemraster erreicht werden, bzw. können Innenausbaukomponenten schrankübergreifend montiert werden.

Zur weiteren Durchsetzung der Durchgängigkeit eines durchgängig und komponentenübergreifend maßhaltigen Rastermaßes von Befestigungsaufnahmen im Schaltschrankumfeld kann vorgesehen sein, dass auch eine Systemlochung von Befestigungsaufnahmen in parallel beabstandeten Profilseiten eines Türrohrrahmens unter Einhaltung des Rastermaßes ausgebildet ist, so dass eine Innenausbaukomponente zwischen den parallel beabstandeten Profilseiten montiert werden kann.

Wenn das Rahmengestell parallel beabstandete Befestigungsprofilseiten mit jeweils darin ausgebildeten Befestigungsaufnahmen aufweist, kann eine Innenausbaukomponenten, etwa ein Montagechassis, über eine erste der beiden Befestigungsprofilseiten eingehängt und entweder auch über diese Befestigungsprofilseite von außen montiert sein, oder durch die andere Befestigungsprofilseite hindurch über die Innenseite der ersten Befestigungsprofilseite verschraubt sein.

Die dritten Befestigungsprofilseiten und die Montageseite können jeweils entlang ihrer Längsrichtung unter Einhaltung eines konstanten Rastermaßes zueinander beabstandete Befestigungsaufnahmen aufweisen, wobei die Befestigungsaufnahmen der dritten Befestigungsprofilseiten und der Montageseite in Richtung senkrecht zu der Längsrichtung gegebenenfalls unter Einhaltung des Rastermaßes zueinander beabstandet sind. Dadurch wird erreicht, dass sich die Einhaltung des Rastermaßes auch schaltschrankübergreifend, das heißt zwischen aneinander grenzenden Schaltschrankrahmengestellen erstreckt, so dass auch Innenausbaukomponenten zwischen den aneinander grenzenden Rahmengestellen geführt werden können, so dass die Innenausbaukomponente über ein erstes ihrer gegenüber liegenden Enden in einem ersten der Rahmengestelle, beispielsweise an einem vertikal verlaufenden Montagechassis in dem ersten Schaltschrankrahmengestell, festgelegt ist, und an einem dem ersten gegenüberliegenden zweiten Ende in dem an das erste Rahmengestell angrenzenden zweiten Rahmengestell wiederum beispielsweise über ein weiteres Montagechassis in dem zweiten Schaltschrankrahmengestell festgelegt werden kann.

Die Innenausbaukomponenten können mehrere Befestigungspunkte, beispielsweise jeweils ein Befestigungsmittel an gegenüberliegenden Enden der Innenausbaukomponente aufweisen, wobei der Abstand der Befestigungspunkte oder Befestigungsmittel zweckmäßigerweise einem Vielfachen des Rastermaßes entspricht.

Der Anreihverbinder kann an gegenüberliegenden Längsseiten jeweils einen Befestigungsflansch aufweisen, der sich senkrecht zu seiner Montageseite erstreckt, wobei der Anreihverbinder über die Befestigungsflansche an gegenüber liegenden Befestigungsprofilseiten an den gegenüberliegenden Außenseiten der aneinander grenzenden Profilrahmen festgelegt, insbesondere verschraubt ist.

Sämtliche Vertikal- und Horizontalprofile können als Hohlkammerprofile, insbesondere als Hohlkammerprofile mit identischem Querschnitt, ausgebildet sein. Die Hohlkammerprofile können eine erste und eine zweite Befestigungsprofilseite aufweisen, die über eine dritte senkrecht zu diesen verlaufende Befestigungsprofilseite parallel beabstandet miteinander verbunden sind, wobei die erste der beiden Befestigungsprofilseiten an einer Außenseite des Schaltschranks angeordnet ist und sich senkrecht zu dieser ein Dichtsteg des Profils erstreckt, und wobei die zweite der beiden parallelen Befestigungsprofilseiten an einer Innenseite des Schaltschranks angeordnet ist.

Die Rahmengestelle können einen rechteckigen Bodenrahmen aus vier im rechten Winkel miteinander verbundenen Horizontalprofilen aufweisen, wobei die Profile des Bodenrahmens jeweils einen sich senkrecht zu den zweiten Befestigungsprofilseiten erstreckenden umlaufenden Auflageflansch mit einer umlaufenden Reihe aus Befestigungsaufnahmen aufweisen.

Weitere Einzelheiten der Erfindung werden anhand der nachstehenden Figuren erläutert. Dabei zeigt:
- Figur 1: einen Horizontalquerschnitt durch einen vertikalen Profilrahmen eines Schaltschranks gemäß einem Beispiel, das nicht Teil der Erfindung ist;
- Figur 2: eine Detail der Seitenansicht eines Profilrahmens eines Schaltschranks mit daran befestigter Innenausbaukomponente unter Einhaltung des Rastermaßes gemäß einem Beispiel, das nicht Teil der Erfindung ist;
- Figur 3: eine Detailansicht einer als Montagechassis ausgebildeten Innenausbaukomponente gemäß einem Beispiel, das nicht Teil der Erfindung ist;

- Figur 4: eine weitere Detailansicht einer als Montagechassis ausgebildeten Innenausbaukomponente gemäß einem Beispiel, das nicht Teil der Erfindung ist;
- Figur 5: eine Darstellung zur Veranschaulichung des Einhängevorhangs eines Montagechassis gemäß Figur 4 über die gegenüberliegenden parallelen Profile eines Profilrahmens eines Schaltschranks gemäß einem Beispiel, das nicht Teil der Erfindung ist;
- Figur 6: ein Schaltschrankrahmengestell, über das verschiedene Innenausbaukomponenten montiert sind gemäß einem Beispiel, das nicht Teil der Erfindung ist;
- Figur 7: ein weiteres Schaltschrankrahmengestell, über das verschiedene Innenausbaukomponenten montiert sind gemäß einem Beispiel, das nicht Teil der Erfindung ist; und
- Figur 8: eine Schaltschrankanordnung aus zwei über einen Anreihverbinder miteinander verbundenen Rahmengestellen gemäß einer Ausführungsform der Erfindung.

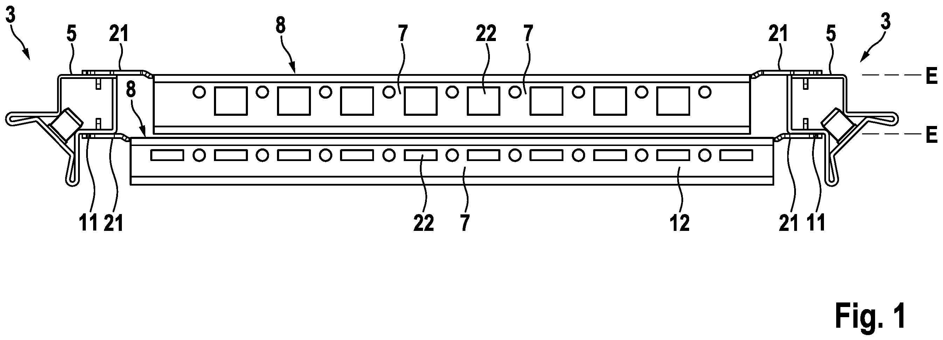

Die Figur 1 zeigt einen Horizontalquerschnitt durch ein Rahmengestell 2 eines Schaltschranks 1, wobei die sichtbar werdende Querschnittsgeometrie der Vertikalprofile 3 der aus der DE 10 2014 1011404 A1 bekannten Geometrie ähnelt. Die Querschnittsgeometrie zeichnet sich insbesondere dadurch aus, dass das Vertikalprofil 3 im Wesentlichen zwei parallel zueinander angeordnete Montageebenen E über die ersten Befestigungsprofilseiten 5 und die zweiten Befestigungsprofilseiten 11 zur Verfügung stellt. Die Befestigungsprofilseiten 5, 11 liegen paarweise in einer Ebene E und weisen jeweils eine Reihe Befestigungsaufnahmen (nicht dargestellt) auf, so dass über die Ebenen E eine Innenausbaukomponente 7 in der Ebene E festgelegt werden kann.

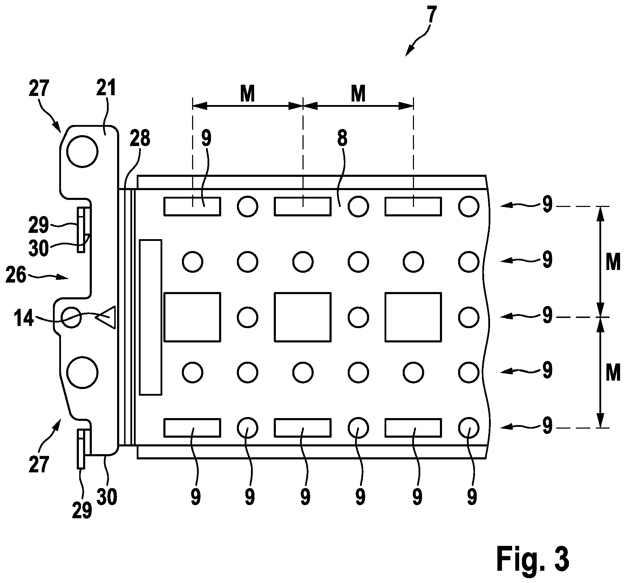

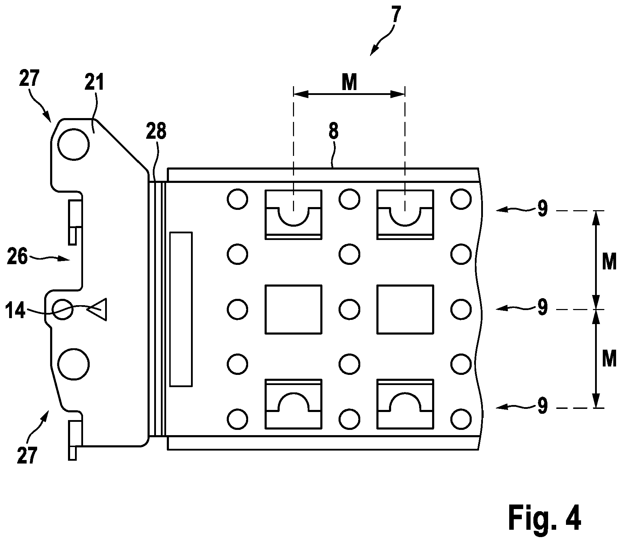

Die Innenausbaukomponente 7 weist eine Montageseite 8 auf, die sich im Wesentlichen über den gesamten Abstand zwischen den Vertikalprofilen 3 erstreckt. Endseitig mündet die Montageseite 8 jeweils in einen Befestigungsflansch 21, über den die Innenausbaukomponente 7 an den Befestigungsprofilseiten 5, 11 und die darin ausgebildeten Befestigungsaufnahmen (nicht dargestellt) festgelegt werden kann. Die Innenausbaukomponente 7 kann dazu nach Art eines Montagechassis ausgebildet sein, wie es aus der DE 196 47 802 C1 bekannt ist. Das Montagechassis 7 weist an seinen gegenüberliegenden Enden Befestigungsflansche 21 auf, die Hakenelemente (vgl. Figuren 3 und 4) umfassen, über die das Montagechassis 7 über die in den Befestigungsprofilseiten 5, 11 vorgesehenen Befestigungsaufnahmen eingehängt werden kann. Wie zu erkennen ist, weist die Innenausbaukomponente 7 entlang ihrer Längsseite 12 eine weitere Befestigungslochreihe 22 auf.

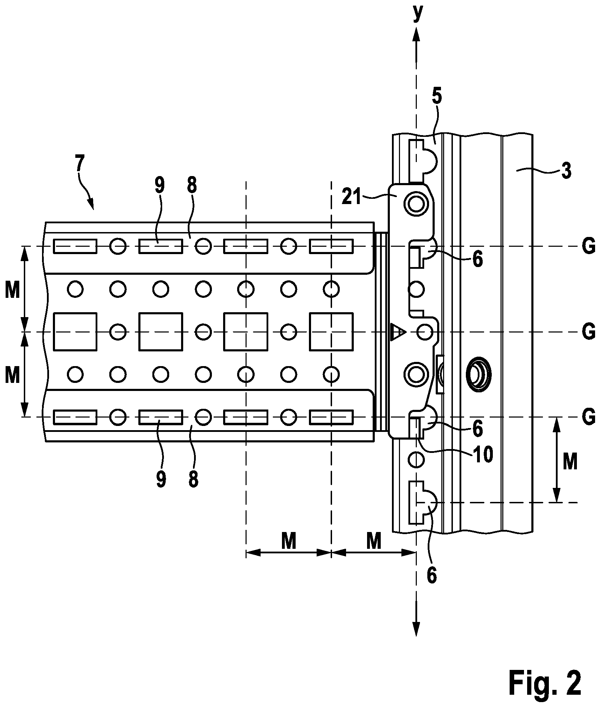

Die Figur 2 zeigt beispielhaft anhand einer Ausschnittsansicht eines Vertikalprofils 3 eines Schaltschrankrahmengestells mit darin eingehängter Innenausbaukomponente 7, die als ein Montagechassis ausgebildet ist, die komponentenübergreifende Erhaltung des Rastermaßes M. Das Vertikalprofil 3 weist auf einer ersten Befestigungsprofilseite 5 eine erste Reihe Befestigungsaufnahmen 6 auf, die unter dem Rastermaß M angeordnet sind. Ebenso weist das Montagechassis 7 auf Montageseiten 8 jeweils eine sich in Längsrichtung der jeweiligen Montageseite 8 erstreckende zweite Reihe Befestigungsaufnahmen 9 auf, die wiederum untereinander einen Abstand aufweisen, welcher demselben Rastermaß M entspricht.

Es ist in Figur 2 weiterhin zu erkennen, dass für die komponentenübergreifende Einhaltung des Rastermaßes M, das heißt für die Einhaltung des Rastermaßes M zwischen dem Vertikalprofil 3 und der Innenausbaukomponente 7, der Mittelpunkt jeweils einer der Befestigungsaufnahmen 6 der in einer gemeinsamen Ebene E (vgl. Figur 1) liegenden Befestigungsprofilseiten 5 auf einer Geraden G liegt, auf der die Mittelpunkte der zweiten Reihe Befestigungsaufnahmen 9 der Montageseite 8 liegen. Dadurch wird erreicht, dass sowohl die Befestigungsaufnahmen 6 in der Befestigungsprofilseite 5 als auch die Befestigungsaufnahmen 9 in der Montageseite 8 der Innenausbaukomponente 7 in einem zweidimensionalen Lochraster liegen, wobei der Rasterabstand in beiden Raumdimensionen jeweils das Rastermaß M aufweist.

Zur präzisen Ausrichtung der Innenausbaukomponente 7 in Bezug auf das Vertikalprofil 3 ist vorgesehen, dass die Innenausbaukomponente 7 einen Montageflansch 21 mit einem Hakenelement (vgl. Figur 3) aufweist, über welches die Innenausbaukomponente 7 auf einem Begrenzungsrand 10 einer der Befestigungsaufnahmen 6 in der Befestigungsprofilseite 5 aufliegt.

Mit Bezug auf die Figuren 3 und 4 sind beispielhafte Ausführungsformen einer Innenausbaukomponente 7 gezeigt, die nicht Teil der Erfindung ist. Diese sind als Montagechassis ausgebildet. Die Montagechassis weisen endseitig jeweils einen Montageflansch 21 auf, der über Haken 29 in die erste Reihe Befestigungsaufnahmen eines Rahmenprofils eingreifen kann. Die Hakenelemente 29 weisen jeweils eine Auflageseite 30 auf, über die die Innenausbaukomponente 7 auf dem mit Bezug auf die Figur 2 beschriebenen Begrenzungsrand 10 einer der Befestigungsaufnahmen 6 an der Befestigungsprofilseite 5 aufliegen, so dass die zweite Reihe Befestigungsaufnahmen 9 in der Montageseite 8 der Innenausbaukomponente 7 präzise in Bezug auf die Befestigungsaufnahmen 6 der ersten Befestigungsprofilseite 5 angeordnet sind, nämlich derart, dass die zweiten Befestigungsaufnahmen 9 in Erstreckungsrichtung y der ersten Reihe Befestigungsaufnahmen 6 unter Einhaltung des Rastermaßes M der ersten Reihe Befestigungsaufnahmen 6 angeordnet ist. Des Weiteren können die zweiten Befestigungsaufnahmen 9 untereinander unter dem Rastermaß M und in Bezug auf eine zugeordnete Befestigungsaufnahme 6 der Befestigungsprofilseite 5 ebenfalls unter Einhaltung des Rastermaßes angeordnet sein.

Wie in den Figuren 3 und 4 gezeigt ist, können die Montageseiten 8 mehrere Reihen Befestigungsaufnahmen 9 aufweisen, wobei die Befestigungsaufnahmen 9 der Reihen jeweils in Längsrichtung der Reihen unter dem Rastermaß M beabstandet sein können, und wobei ein senkrechter Abstand der Reihen zueinander ebenfalls unter Einhaltung des Rastermaßes M ausgebildet sein kann. Die Einhaltung des Rastermaßes kann sich dabei auf gleichartige Lochgeometrien oder auf geometrieunabhängig aufeinanderfolgende Befestigungsaufnahmen beziehen. Das Rastermaß M kann beispielsweise 25 mm betragen.

Beispielsweise kann nochmals mit Bezug auf die Figur 2 der Abstand zwischen einer Befestigungsaufnahme 6 in der Befestigungsprofilseite 5 und einer zugeordneten zweiten Reihe Befestigungsaufnahmen 9 der Montageseite 8 für jede der Befestigungsaufnahmen 9 gerade ein Vielfaches des Rastermaßes M betragen.

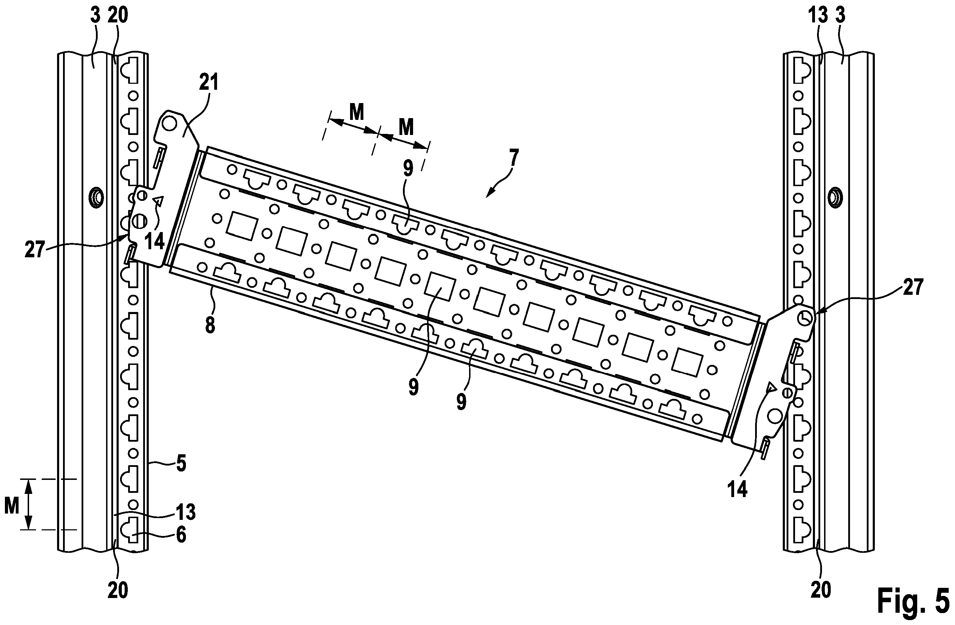

Die Montageflansche 2 weisen an ihren gegenüber liegenden Außenkanten jeweils eine Freistellung 27 auf, welche das Einschwenken des Montagechassis 7 auch dann erlauben soll, wenn das Montagechassis 7 auf einer der Außenseite A des Schaltschranks 1 zugewandten Montageebene E (vergleiche Figur 1) über die Außenseite montiert werden soll, wenn an der Außenseite, das heißt unmittelbar angrenzend an die Dichtstege 20, bereits ein Flachteil montiert ist, so dass der Zugang zu der außenliegenden Befestigungsebene E von der Außenseite A des Schaltschranks 1 her verschlossen ist. In diesem Fall kann das Montagechassis 7 von der Innenseite I her in der in Figur 5 dargestellten Weise (hier wurde zur einfacheren Darstellung das Seitenwandelement weggelassen) eingeschwenkt werden. Die Freistellungen 27 verhindern, dass das Montagechassis 7 beim Einschwenken mit den Vertikalprofilen 3 verklemmt.

Zur Vereinfachung der Montage des Montagechassis 7 weisen die Montageflansche 21 des Chassis 7 jeweils eine Markierung 14 auf, wobei die Vertikalprofile 3 an ihren Dichtstegen 20 entsprechende Markierungen (nicht dargestellt) aufweisen.

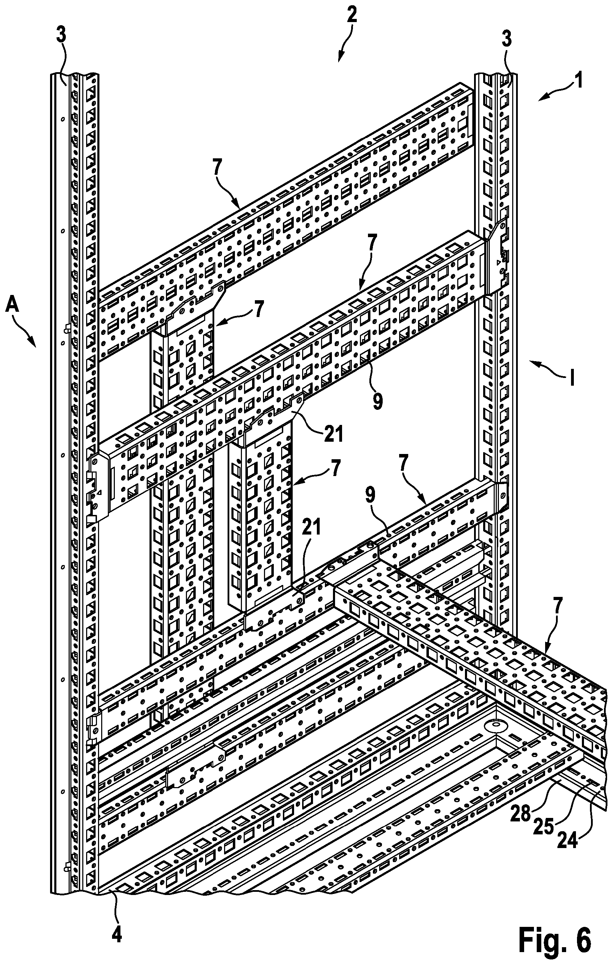

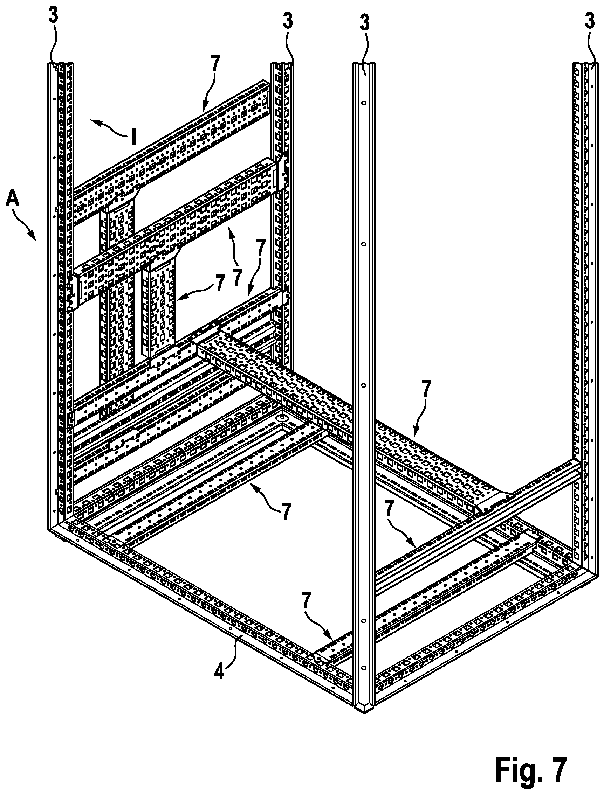

Die Figuren 6 und 7 veranschaulichen die sich aus dem erfindungsgemäßen Konzept ergebenden Möglichkeit zur Befestigung von Montagechassis für den Schaltschrankinnenausbau. Während bei den aus dem Stand der Technik bekannten Konzepten stets nur Montagechassis 7 zwischen gegenüberliegenden Vertikal- oder Horizontalprofilen montiert werden konnten, ermöglicht es das erfindungsgemäße Konzept, nach dem das Rastermaß, beispielsweise ein 25 mm-Rastermaß, in allen Raumrichtungen durchgängig erhalten werden kann, dass Montagechassis 7 nicht nur unmittelbar an Profilen des Rahmengestells des Schaltschranks festgelegt werden können, sondern beispielsweise auch, wie in den Figuren 6 und 7 gezeigt ist, die Montage von Chassis 7, die an weiteren Montagechassis 7 im rechten Winkel festgelegt sind. Wie es die Figuren 6 und 7 zeigen, so können beispielsweise zwei horizontale erste Montagechassis 7 zwischen gegenüber liegenden Vertikalprofilen 3 des Rahmengestells 2 montiert sein, die einen vertikalen Abstand zueinander aufweisen, wobei ein weiteres Montagechassis 7 vertikal zu den beiden horizontalen Montagechassis 7 angeordnet ist und diese über seine gegenüberliegenden Montageflansche 21, die an gegenüberliegenden zweiten Reihen Befestigungsaufnahmen 9 der ersten Montagechassis 7 befestigt sind, verbindet. Das Montagekonzept ist auf alle drei Raumdimensionen im Schaltschrank übertragbar. Wie dargestellt ist, kann somit auch eine weitere Montageschiene 7, die sich senkrecht zu der durch die vertikalen Profile 3 gebildeten Montageebene erstreckt, an einem zwischen den Vertikalprofilen 3 montierten Montagechassis 7 festgelegt werden, wobei stets sichergestellt ist, dass die von jeglichen Montagechassis 7 bereitgestellten zweiten Reihen Befestigungsaufnahmen 9 innerhalb des zwei- oder dreidimensionalen Rastermaßes liegen.

Die Figuren 6 und 7 zeigen weiterhin, dass erfindungsgemäß somit auch Gleitschienen, welche für den Einbau von Montageplatten im Innenraum des Schaltschranks verwendet werden und nach dem Stand der Technik im Übrigen funktionslos waren, nunmehr in das 25 mm-Raster eingebunden werden und somit nach der Befestigung der Montageplatte im Schaltschrankinnenraum noch als weitere Funktion die einer Montageschiene, mithin die eines Montagechassis, aufweisen können.

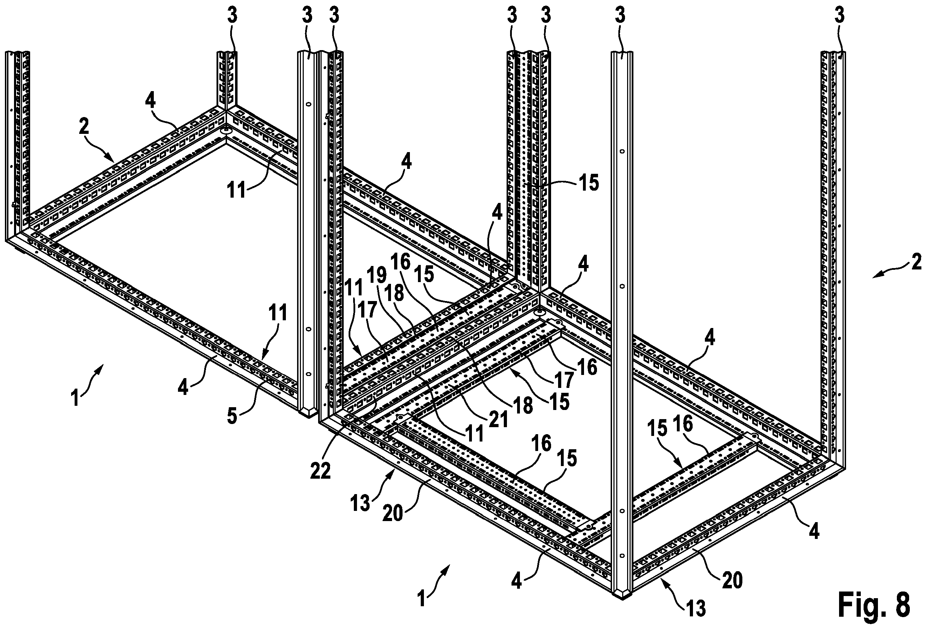

Die Figur 8 zeigt eine Schaltschrankanordnung aus zwei Schaltschränken 1, die jeweils ein Rahmengestell 2 aufweisen, wobei jeweils zwei Vertikalprofile 3 und zwei Horizontalprofile 4 (nur die unteren Vertikalprofile 4 sind dargestellt) jeweils einen Profilrahmen bilden, über die die aneinander grenzenden Rahmengestelle 2 miteinander in Verbindung stehen. Die Rahmengestelle sind über einen als Montagechassis ausgebildeten Anreihverbinder 15 miteinander verbunden, wobei der Anreihverbinder 15 eine weitere Montageseite 16 mit weiteren Befestigungsaufnahmen 17 aufweist. Die weitere Montageseite 16 fluchtet mit jeweils einer dritten Befestigungsprofilseite 18 der aneinander grenzenden Profile 3, 4 des Profilrahmens, wobei die dritten Befestigungsprofilseiten 18 eine dritte Reihe Befestigungsaufnahmen 19 aufweisen und sich senkrecht zu den ersten und zweiten Befestigungsprofilseiten 5, 11 erstrecken.

Die Profilrahmen grenzen über sich senkrecht zu den ersten Befestigungsprofilseiten 5 des Profilrahmens erstreckende Dichtstege 20 aneinander und weisen somit einen Abstand zwischen den ersten Befestigungsprofilseiten 5 auf. Dieser Abstand wird gerade über den Anreihverbinder 15 mit seiner Montageseite 16 überbrückt, so dass eine durchgehende Montageebene zwischen den Profilrahmen 3, 4 der aneinandergrenzenden Schaltschränke 1 gebildet ist.

Die dritten Befestigungsprofilseiten 18 und die Montageseite 16 weisen jeweils entlang ihrer Längsrichtung unter Einhaltung des konstanten Rastermaßes zueinander beabstandete Befestigungsaufnahmen 17, 19 auf, wobei die Befestigungsaufnahmen 17, 19 der dritten Befestigungsprofilseiten 18 und der Montageseite 16 in Richtung senkrecht zu der Längsrichtung ebenfalls unter Einhaltung des Rastermaßes zueinander beabstandet sind. Dadurch wird erreicht, dass eine Innenausbaukomponente aus dem Inneren eines ersten der Schaltschränke 1 in das Innere eines der zweiten der Schaltschränke 1 durch die aneinandergrenzenden Profilrahmen hindurch geführt werden kann, wobei die Innenausbaukomponente 7 beispielsweise ein Montagechassis sein kann, das an einem ebenfalls im Rastermaß angeordneten weiteren Montagechassis über seine gegenüberliegenden Befestigungsflansche festgelegt ist.

### Bezugszeichenliste

- 1: Schaltschrank
- 2: Rahmengestell
- 3: Vertikalprofil
- 4: Horizontalprofil
- 5: erste Befestigungsprofilseite
- 6: erste Reihe Befestigungsaufnahmen
- 7: Innenausbaukomponente
- 8: Montageseite der Innenausbaukomponente
- 9: zweite Reihe Befestigungsaufnahmen
- 10: Begrenzungsrand
- 11: zweite Befestigungsprofilseite
- 12: Längsseite Innenausbaukomponente
- 13: Dichtkante
- 14: Markierung
- 15: Anreihverbinder
- 16: weitere Montageseite
- 17: weitere Befestigungsaufnahme
- 18: dritte Befestigungsprofilseite
- 19: dritte Reihe Befestigungsaufnahmen
- 20: Dichtsteg
- 21: Befestigungsflansch
- 22: weitere Befestigungslochreihe
- 23: Bodenrahmen
- 24: Auflageflansch
- 25: umlaufende Reihe von Befestigungsaufnahmen
- 26: Ausschnitt
- 27: Freistellung
- 28: Kröpfung
- 29: Haken
- 30: Auflageseite
- A: Außenseite
- E: Ebene
- G: Gerade
- I: Innenseite
- M: Rastermaß
- y: Erstreckungsrichtung

## Patentansprüche

1. Schaltschrankanordnung mit mindestens zwei Schaltschränken (1), wobei die Schaltschränke jeweils ein quaderförmiges Rahmengestell (2) aus vier Vertikalprofilen (3) und acht Horizontalprofilen (4) aufweisen, wobei vier der Profile (3, 4) einen rechteckigen Profilrahmen bilden und zwei der vier den Profilrahmen bildenden und sich parallel zueinander erstreckenden Profile (3,4) jeweils eine erste und eine zweite Befestigungsprofilseite (5, 11) mit jeweils einer ersten Reihe aus unter Einhaltung eines konstanten Rastermaßes (M) zueinander beabstandeten Befestigungsaufnahmen (6) aufweisen, wobei die ersten Befestigungsprofilseiten (5) an einer Außenseite (A) des Profilrahmens angeordnet und in einer ersten gemeinsamen Ebene (E) liegen und wobei die zweiten Befestigungsprofilseiten (11) zu den ersten Befestigungsprofilseiten (5) parallel beabstandet an einer der Außenseite (A) gegenüber liegenden Innenseite (I) des Profilrahmens angeordnet in einer zweiten gemeinsamen Ebene (E) liegen, und wobei an den beiden ersten Befestigungsprofilseiten (5) eine sich zwischen den parallelen Profilen (3, 4) erstreckende erste Innenausbaukomponente (7) montiert ist, die eine Montageseite (8) mit einer zweiten Reihe Befestigungsaufnahmen (9) aufweist, die sich senkrecht zur Erstreckungsrichtung (y) der ersten Reihe (6) erstreckt und unter Einhaltung des Rastermaßes (M) der ersten Reihe Befestigungsaufnahmen (6) angeordnet ist, wobei die Rahmengestelle (2) über ihre rechteckigen Profilrahmen aneinandergrenzen und entlang zweier aneinander grenzender Profile (3, 2) der Profilrahmen über mindestens einen Anreihverbinder (15) miteinander verbundenen sind, **dadurch gekennzeichnet, dass** der Anreihverbinder (15) eine weitere Montageseite (16) mit weiteren Befestigungsaufnahmen (17) aufweist, wobei die weitere Montageseite (16) mit jeweils einer dritten Befestigungsprofilseite (18) der aneinander grenzenden Profile (3, 4) fluchtet, und wobei die dritten Befestigungsprofilseiten (18) eine dritte Reihe Befestigungsaufnahmen (19) aufweisen und sich senkrecht zu den ersten und zweiten Befestigungsprofilseiten (5, 11) erstrecken.

2. Schaltschrankanordnung nach Anspruch 1, bei der für die Einhaltung des Rastermaßes (M) der Mittelpunkt jeweils einer der Befestigungsaufnahmen (6) der in einer gemeinsamen Ebene (E) liegenden Befestigungsprofilseiten (5) auf einer Geraden (G) liegt, auf der die Mittelpunkte der zweiten Reihe Befestigungsaufnahmen (9) der Montageseite (8) liegen.

3. Schaltschrankanordnung nach Anspruch 1, bei der die erste gemeinsame Ebene (E) eine von der Außenseite des Rahmengestells (2) zugängliche Montageebene für die Befestigung der Innenausbaukomponente (7) und die Montageebene gegenüber einer äußeren Dichtkante (13) des Rahmengestells (2) zurück versetzt ist.

4. Schaltschrankanordnung nach einem der vorangegangenen Ansprüche, bei der die über die erste oder die zweite Ebene (E) an den Profilen (3, 4) montierte erste Innenausbaukomponente (7) mit ihrer Montageseite (8) in der jeweiligen Ebene (E), über die sie montiert ist, liegt.

5. Schaltschrankanordnung nach einem der vorangegangenen Ansprüche, bei der mindestens eine der Befestigungsprofilseiten (5, 11) je Ebene (E) eine Positionierhilfe für die Montage der ersten Innenausbaukomponente (7) in der Ebene (E) aufweist, wobei die Positionierhilfe Markierungen (14) umfasst, die in Längsrichtung der jeweiligen ersten oder zweiten Befestigungsprofilseite (5, 11) unter einem Abstand zueinander angeordnet sind, der dem Rastermaß (M) oder einem Vielfachen davon entspricht.

6. Schaltschrankanordnung nach einem der vorangegangenen Ansprüche, bei der an der ersten Innenausbaukomponente (7) eine zweite Innenausbaukomponente (7) festgelegt ist, wobei sich senkrecht zu der zweiten Reihe Befestigungsaufnahmen (9) der Montageseite (8) der ersten Innenausbaukomponente (7) eine weitere zweite Reihe Befestigungsaufnahmen (9) einer weiteren Montageseite (8) der zweiten Innenausbaukomponente (7) parallel zu der ersten Reihe Befestigungsaufnahmen (6) der ersten Befestigungsprofilseite (5) erstreckt.

7. Schaltschrankanordnung nach Anspruch 6, bei der die zweite Reihe Befestigungsaufnahmen (9) der weiteren Montageseite (8) der zweiten Innenausbaukomponente (7) unter Einhaltung des Rastermaßes (M) der ersten Reihe Befestigungsaufnahmen (6) angeordnet ist.

8. Schaltschrankanordnung nach Anspruch 7, bei der die Befestigungsaufnahmen (9) der zweiten Reihe Befestigungsaufnahmen (9) der ersten Innenausbaukomponente (7) unter dem Rastermaß (M) der ersten Reihe Befestigungsaufnahmen (6) angeordnet sind, sowohl untereinander, als auch in Bezug auf die erste Reihe Befestigungsaufnahmen (6) der ersten Befestigungsprofilseite (5), so dass die Befestigungsaufnahmen (6, 9) der ersten Befestigungsprofilseite (5) sowie der ersten und der zweiten Innenausbaukomponente (7) in einem zweidimensionalen Lochraster mit dem in zwei Dimensionen konstanten Rastermaß (M), beispielsweise in einem 25 mm x 25 mm Lochraster, angeordnet sind.

9. Schaltschrankanordnung nach einem der vorangegangenen Ansprüche, bei der die Profilrahmen über sich senkrecht zu den ersten Befestigungsprofilseiten (5) des Profilrahmens ersteckende Dichtstege (20) aneinander grenzen, wodurch ein Abstand zwischen den ersten Befestigungsprofilseiten (5) ausgebildet ist, den der Anreihverbinder (15) mit seiner Montageseite (16) überbrückt, so dass eine durchgehende Montageebene zwischen den Profilrahmen (3, 4) der aneinander grenzenden Schaltschränke (1) gebildet ist.

10. Schaltschrankanordnung nach einem der vorangegangenen Ansprüche, bei der die dritten Befestigungsprofilseiten (18) und die Montageseite (16) jeweils entlang ihrer Längsrichtung unter Einhaltung eines konstanten Rastermaßes (M) zueinander beabstandete Befestigungsaufnahmen (17, 19) aufweisen, wobei die Befestigungsaufnahmen (17, 19) der dritten Befestigungsprofilseiten (18) und der Montageseite (16) in Richtung senkrecht zu der Längsrichtung ebenfalls unter Einhaltung des Rastermaßes (M) zueinander beabstandet sind.

11. Schaltschrankanordnung nach einem der vorangegangenen Ansprüche, bei der die Innenausbaukomponente (7) aus dem Innern eines ersten der Schaltschränke (1) in das Innere eines zweiten der Schaltschränke (1) durch die aneinander grenzenden Profilrahmen hindurch geführt ist.

12. Schaltschrankanordnung nach einem der vorangegangenen Ansprüche, bei der der Anreihverbinder (15) an gegenüberliegenden Längsseiten jeweils einen Befestigungsflansch (21) aufweist, die sich senkrecht zu seiner Montageseite (16) erstrecken, wobei der Anreihverbinder (15) über die Befestigungsflansche (21) an gegenüber liegenden Befestigungsprofilseiten (5) an den gegenüber liegenden Außenseiten (A) der aneinandergrenzenden Profilrahmen festgelegt, insbesondere verschraubt ist.

13. Schaltschrankanordnung nach einem der vorangegangenen Ansprüche, bei der sämtliche Vertikal- und Horizontalprofile (3, 4) als Hohlkammerprofile ausgebildet sind, die eine erste und eine zweite Befestigungsprofilseite (5, 11) aufweisen, die über eine dritte senkrecht zu diesen verlaufende Befestigungsprofilseite (18) parallel beabstandete miteinander verbunden sind, wobei die erste der beiden Befestigungsprofilseiten (5, 11) an einer Außenseite (A) des Schaltschranks (1) angeordnet ist und sich senkrecht zu dieser ein Dichtsteg (20) des Profils (3, 4) erstreckt, und wobei die zweite der beiden Befestigungsprofilseiten (5, 11) an einer Innenseite (I) des Schaltschranks (1) angeordnet ist.

14. Schaltschrankanordnung nach Anspruch 13, bei der ein rechteckiger Bodenrahmen (23) aus vier im rechten Winkel miteinander verbundenen Horizontalprofilen (4) gebildet ist, wobei die Profile (4) des Bodenrahmens einen sich senkrecht zu den zweiten Befestigungsprofilseiten (11) ersteckenden umlaufenden Auflageflansch (24) mit einer umlaufenden Reihe von Befestigungsaufnahmen (25) aufweisen.

## Claims

1. A switchgear cabinet arrangement having at least two switchgear cabinets (1), the switchgear cabinets each having a cuboidal framework (2) comprising four vertical profiles (3) and eight horizontal profiles (4), four of the profiles (3, 4) forming a rectangular profile frame, and two of the four profiles (3, 4) which form the profile frame and extend parallel to one another each having a first and a second fastening profile side (5, 11) with in each case a first row of fastening receptacles (6) which are spaced apart from one another with a constant grid dimension (M) being observed, the first fastening profile sides (5) being arranged on an outer side (A) of the profile frame and lying in a first common plane (E), and the second fastening profile sides (11) being arranged at a distance from and parallel to the first fastening profile sides (5) on an inner side (I) of the profile frame opposite the outer side (A) and lying in a second common plane (E), and wherein a first interior fitting component (7) extending between the parallel profiles (3, 4) is mounted on the two first fastening profile sides (5), which first interior fitting component (7) has a mounting side (8) with a second row of fastening receptacles (9) extending perpendicularly to the direction (y) in which the first row (6) extends and is arranged in observance of the grid dimension (M) of the first row of fastening receptacles (6), the frameworks (2) adjoining one another via their rectangular profile frames and being connected to one another via two adjoining profiles (3, 2) of the profile frames via at least one baying connector (15), **characterized in that** the baying connector (15) has a further mounting side (16) with further fastening mounts (17), the further mounting side (16) being aligned in each case with a third fastening profile side (18) of the adjacent profiles (3, 4), and the third fastening profile sides (18) having a third row of fastening mounts (19) and extending perpendicularly to the first and second fastening profile sides (5, 11).

2. The switchgear cabinet arrangement according to claim 1, in which, in order to maintain the grid dimension (M), the center point of in each case one of the fastening receptacles (6) of the fastening profile sides (5) lying in a common plane (E) lies on a straight line (G) on which the centre points of the second row of fastening receptacles (9) of the mounting side (8) lie.

3. The switchgear cabinet arrangement of claim 1, wherein the first common plane (E) is a mounting plane accessible from the outside of the frame (2) for mounting the interior fitting component (7) and the mounting plane is recessed with respect to an outer sealing edge (13) of the frame (2).

4. The switchgear cabinet arrangement according to any one of the preceding claims, wherein the first interior fitting component (7) mounted to the profiles (3, 4) via the first or the second plane (E) has its mounting side (8) located in the respective plane (E) via which it is mounted.

5. The switchgear cabinet arrangement according to any one of the preceding claims, in which at least one of the fastening profile sides (5, 11) per plane (E) has a positioning aid for mounting the first interior fitting component (7) in the plane (E), the positioning aid comprising markings (14) which are arranged in the longitudinal direction of the respective first or second fastening profile side (5, 11) at a distance from one another which corresponds to the grid dimension (M) or a multiple thereof.

6. The switchgear cabinet arrangement according to one of the preceding claims, in which a second interior fitting component (7) is fixed to the first interior fitting component (7), wherein a further second row of fastening receptacles (9) of a further mounting side (8) of the second interior fitting component (7) extends perpendicularly to the second row of fastening receptacles (9) of the mounting side (8) of the first interior fitting component (7) parallel to the first row of fastening receptacles (6) of the first mounting profile side (5).

7. The switchgear cabinet arrangement according to claim 6, wherein the second row of fastening receptacles (9) of the further mounting side (8) of the second interior fitting component (7) is arranged in compliance with the grid dimension (M) of the first row of fastening receptacles (6).

8. The switchgear cabinet arrangement according to claim 7, in which the fastening receptacles (9) of the second row of fastening receptacles (9) of the first interior fitting component (7) are arranged below the grid dimension (M) of the first row of fastening receptacles (6), both with respect to one another and with respect to the first row of fastening receptacles (6) of the first fastening profile side (5), so that the fastening receptacles (6, 9) of the first fastening profile side (5) and of the first and the second interior fitting components (7) are arranged in a two-dimensional hole grid with the grid dimension (M) constant in two dimensions, for example in a 25 mm x 25 mm hole grid.

9. The switchgear cabinet arrangement according to one of the preceding claims, in which the profile frames adjoin one another via sealing webs (20) extending perpendicularly to the first mounting profile sides (5) of the profile frame, as a result of which a spacing is formed between the first mounting profile sides (5), which spacing is bridged by the baying connector (15) with its mounting side (16), so that a continuous mounting plane is formed between the profile frames (3, 4) of the adjoining switchgear cabinets (1).

10. The switchgear cabinet arrangement according to one of the preceding claims, in which the third fastening profile sides (18) and the mounting side (16) each have fastening receptacles (17, 19) which are spaced apart from one another along their longitudinal direction while maintaining a constant grid dimension (M), the fastening receptacles (17, 19) of the third fastening profile sides (18) and of the mounting side (16) being spaced apart from one another in the direction perpendicular to the longitudinal direction, likewise while maintaining the grid dimension (M).

11. The switchgear cabinet arrangement according to any one of the preceding claims, wherein the interior fitting component (7) is passed from the interior of a first of the switchgear cabinets (1) to the interior of a second of the switchgear cabinets (1) through the contiguous profile frames.

12. The switchgear cabinet arrangement according to one of the preceding claims, in which the baying connector (15) has a fastening flange (21) on opposite longitudinal sides in each case, which extend perpendicularly to its mounting side (16), the baying connector (15) being fixed, in particular screwed, via the fastening flanges (21) on opposite fastening profile sides (5) to the opposite outer sides (A) of the adjoining profile frames.

13. The switchgear cabinet arrangement according to one of the preceding claims, in which all vertical and horizontal profiles (3, 4) are formed as hollow chamber profiles which have a first and a second fastening profile side (5, 11), which are connected to one another at a parallel distance via a third fastening profile side (18) running perpendicularly thereto, wherein the first of the two fastening profile sides (5, 11) is arranged on an outer side (A) of the switchgear cabinet (1) and a sealing web (20) of the profile (3, 4) extends perpendicularly thereto, and wherein the second of the two fastening profile sides (5, 11) is arranged on an inner side (I) of the switchgear cabinet (1).

14. The switchgear cabinet arrangement according to claim 13, in which a rectangular base frame (23) is formed from four horizontal profiles (4) connected to one another at right angles, the profiles (4) of the base frame having a circumferential support flange (24) extending perpendicularly to the second mounting profile sides (11) and having a circumferential row of mounting receptacles (25).

## Revendications

1. Disposition d'armoire de commande avec au moins deux armoires de commande (1), dans laquelle les armoires de commande comprennent chacune un châssis parallélépipédique (2) constitué de quatre profilés verticaux (3) et de huit profilés horizontaux (4), dans laquelle quatre des profilés (3, 4) forment un cadre profilé rectangulaire et deux des quatre profilés (3, 4) constituant le cadre profilé et s'étendant parallèlement entre eux comprennent chacun un premier et un deuxièmement côté profilé de fixation (5, 11) avec chacun une première rangée de logements de fixation (6) distants entre eux en respectant une dimension modulaire (M) constante, dans laquelle les premiers côtés profilés de fixation (5) sont disposés au niveau d'un côté externe (A) du cadre profilé et se trouvant dans un premier plan commun (E) et dans laquelle les deuxièmes côtés profilés de fixation (11) sont disposés de manière distante parallèlement aux premiers côtés profilés de fixation (5) dans un côté interne (I) du cadre profilé qui fait face au côté externe (A), se trouvent dans un deuxième plan (E) et dans laquelle, sur les deux premiers côtés profilés de fixation (5), est monté un premier composant d'aménagement intérieur (7) s'étendant entre les profilés parallèles (3, 4), qui comprend un côté de montage (8) avec une deuxième rangée de logements de fixation (9), qui s'étend perpendiculairement à la direction d'extension (y) de la première rangée (6) et qui est disposée en respectant la dimension modulaire (M) de la première rangée de logements de fixation (6), dans laquelle les châssis (2) sont adjacents les uns aux autres par l'intermédiaire de leurs cadres profilés rectangulaires et sont reliés entre eux, le long de deux profilés adjacents (3, 2) des cadres profilés, par l'intermédiaire d'au moins un connecteur (15), **caractérisée en ce que** le connecteur (15) comprend un autre côté de montage (16) avec d'autres logements de fixation (17), dans laquelle l'autre côté de montage (16) est aligné avec respectivement un troisième côté profilé de fixation (18) des profilés adjacents (3, 4) et dans laquelle les troisièmes côtés profilés de fixation (18) comprennent une troisième rangée de logements de fixation (19) et s'étendent perpendiculairement aux premier et deuxième côtés profilés de fixation (5, 11).

2. Disposition d'armoire de commande selon la revendication 1, dans laquelle, pour le respect de la dimension modulaire (M), le centre respectivement d'un des logements de fixation (6) des côtés profilés de fixation (5) se trouvant dans un plan commun (E) se trouve sur une droite (G) sur laquelle se trouvent les centres de la deuxième rangée de logements de fixation (9) du côté de montage (8).

3. Disposition d'armoire de commande selon la revendication 1, dans laquelle le premier plan commun (E) comprend un plan de montage, accessible par le côté externe du châssis (2), pour la fixation du composant d'aménagement intérieur (7) et le plan de montage est décalé vers l'arrière par rapport à une arête d'étanchéité extérieure (13) du châssis (2).

4. Disposition d'armoire de commande selon l'une des revendications précédentes, dans laquelle le premier composant d'aménagement intérieur (7), monté par l'intermédiaire du premier ou du deuxième plan (E) sur les profilés (3, 4), se trouve, avec son côté de montage (8) dans le plan (E) respectif par l'intermédiaire duquel il est monté.

5. Disposition d'armoire de commande selon l'une des revendications précédentes, dans laquelle un des côtés profilés de fixation (5, 11) comprend, pour chaque plan (E), une aide au positionnement pour le montage du premier composant d'aménagement intérieur (7) dans le plan (E), dans laquelle l'aide au positionnement comprend des marquages (14) qui sont disposés, dans la direction longitudinale du premier ou du deuxième côté profilé de fixation (5, 11) respectif, à une distance entre eux qui correspond à la dimension modulaire (M) ou à un multiple de celle-ci.

6. Disposition d'armoire de commande selon l'une des revendications précédentes, dans laquelle, sur le premier composant d'aménagement intérieur (7), est fixé un deuxième composant d'aménagement intérieur (7), dans laquelle, perpendiculairement à la deuxième rangée de logements de fixation (9) du côté de montage (8) du premier composant d'aménagement intérieur (7), s'étend une autre deuxième rangée de logements de fixation (9) d'un autre côté de montage (8) du deuxième composant d'aménagement intérieur (7), parallèlement à la première rangée de logements de fixation (6) du premier côté profilé de fixation (5).

7. Disposition d'armoire de commande selon la revendication 6, dans laquelle la deuxième rangée de logements de fixation (9) de l'autre côté de montage (8) du deuxième composant d'aménagement intérieur (7) est disposée en respectant la dimension modulaire (M) de la première rangée de logements de fixation (6).

8. Disposition d'armoire de commande selon la revendication 7, dans laquelle les logements de fixation (9) de la deuxième rangée de logements de fixation (9) du premier composant d'aménagement intérieur (7) sont disposés avec la dimension modulaire (M) de la première rangée de logements de fixation (6), aussi bien entre eux que par rapport à la première rangée de logements de fixation (6) du premier côté profilé de fixation (5), de sorte que les logements de fixation (6, 9) du premier côté profilé de fixation (5) ainsi que du premier et du deuxième composantd'aménagement intérieur (7) sont disposés dans une grille de trous bidimensionnelle avec la dimension modulaire (M) constante dans deux dimensions, par exemple une grille de trous de 25 mm x 25 mm.

9. Disposition d'armoire de commande selon l'une des revendications précédentes, dans laquelle les cadres profilés sont adjacents entre eux par l'intermédiaire de nervures d'étanchéité (20) s'étendant perpendiculairement aux premiers côtés profilés de fixation (5) du cadre profilé, cequi permet de former une distance entre les premiers côtés profilés de fixation (5), que le connecteur (15) comble avec son côté de montage (16), de sorte qu'un plan de montage continu est formé entre les cadres profilés (3, 4) des armoires de commande (1) adjacentes.

10. Disposition d'armoire de commande selon l'une des revendications précédentes, dans laquelle les troisièmes côtés profilés de fixation (18) et le côté de montage (16) comprennent respectivement des logements de fixation (17, 19) distants entre eux le long de leur direction longitudinale en respectant une dimension modulaire (M) constante, dans laquelle les logements de fixation (17, 19) des troisièmes côtés profilés de fixation (18) et du côté de montage (16) sont distants entre eux dans une direction perpendiculaire à la direction longitudinale, également en respectant la dimension modulaire (M).

11. Disposition d'armoire de commande selon l'une des revendications précédentes, dans laquelle le composant d'aménagement intérieur (7) est guidé à partir de l'intérieur d'une première des armoires de commande (1) vers l'intérieur d'une deuxième des armoires de commande (1) à travers les cadres profilés adjacents entre eux.

12. Disposition d'armoire de commande selon l'une des revendications précédentes, dans laquelle le connecteur (15) comprend, au niveau de côtés longitudinaux opposés, respectivement une bride de fixation (21) qui s'étend perpendiculairement à son côté de montage (16), dans lequel le connecteur (15) est fixé, plus particulièrement vissé, par l'intermédiaire des brides de fixation (21), à des côtés profilés de fixation (5) opposés, au niveau des côtés externes (A) opposés des cadres profilés adjacents entre eux.

13. Disposition d'armoire de commande selon l'une des revendications précédentes, dans laquelle tous les profilés verticaux et horizontaux (3, 4) sont conçus comme des profilés creux qui comprennent un premier et un deuxième côtés profilés de fixation (5, 11) qui sont reliés entre eux par l'intermédiaire d'un troisième côté profilé de fixation (18) parallèle s'étendant perpendiculairement à ceux-ci, dans laquelle le premier des deux côtés profilés de fixation (5, 11) est disposé au niveau d'un côté externe (A) de l'armoire de commande (1) et, perpendiculairement à celui-ci, s'étend une nervure d'étanchéité (20) du profilé (3, 4) et dans laquelle le deuxième des deux côtés profilés de fixation (5, 11) est disposé au niveau d'un côté interne (I) de l'armoire de commande (1).

14. Disposition d'armoire de commande selon la revendication 13, dans laquelle un cadre de fond rectangulaire (23) est constitué de quatre profilés horizontaux (4) reliés entre eux à angle droit, dans laquelle les profilés (4) du cadre de fond comprend une bride d'appui (24) périphérique, avec une rangée périphérique de logements de fixation (25), s'étendant perpendiculairement aux deuxièmes côtés profilés de fixation (11).
